Europäisches Patentamt

European Patent Office

Office européen des brevets

(19)

(11) Publication number: **0 246 325 B1**

(12) # EUROPEAN PATENT SPECIFICATION

(45) Date of publication of patent specification: 30.10.91   (51) Int. Cl.⁵: **F04D 17/04**

(21) Application number: **86905927.9**

(22) Date of filing: **01.10.86**

(86) International application number:
**PCT/JP86/00504**

(87) International publication number:
**WO 87/03049 (21.05.87 87/11)**

(54) **CROSS-FLOW COOLING FAN DEVICE.**

(30) Priority: **11.11.85 JP 173697/85 U**

(43) Date of publication of application:
**25.11.87 Bulletin 87/48**

(45) Publication of the grant of the patent:
**30.10.91 Bulletin 91/44**

(84) Designated Contracting States:
**CH DE FR GB LI NL**

(56) References cited:
**FR-A- 1 327 918**
**GB-A- 1 002 310**
**US-A- 3 098 958**
**US-A- 3 385 511**
**US-A- 3 680 974**

(73) Proprietor: **HOSIDEN ELECTRONICS CO., LTD.**
**4-33, Kitakyuhoji 1-chome**
**Yao-shi Osaka(JP)**

(72) Inventor: **OHBAYASHI, Yoshiaki**
**7-13, Chiyogaoka 1-chome**
**Nara-shi Nara 631(JP)**
Inventor: **HASHIMOTO, Kunio**
**2-30, Wakaehigashimachi 6-chome**
**Higashiosaka-shi Osaka 578(JP)**
Inventor: **SAKURAI, Katsumi**
**226, Higashimachi 6-chome**
**Yao-shi Osaka 581(JP)**
Inventor: **NOMA, Hiroyuki**
**Room 401 Nezumimanshion, 13 Minami**
**7-chome**
**Takayasucho, Yao-shi Osaka 581(JP)**

(74) Representative: **Fleuchaus, Leo, Dipl.-Ing. et al**
**Fleuchaus & Wehser Melchiorstrasse 42**
**W-8000 München 71(DE)**

## Description

TECHNICAL FIELD

The present invention relates to a cross flow type cooling fan device installed in electric appliances such as audio-amplifiers, microcomputers, wordprocessors, copying machines, etc. to discharge heat generated by electric components outside the electric appliances, and more particularly to a cross flow type fan device in which every component incorporated therein is so constructed as to be a general purpose component as much as possible to effectively avoid high equipment cost and complication in manufacturing the device.

BACKGROUND ART

A casing used in the conventional cross flow type cooling fan device comprises a bottom plate which surrounds an axially extending impeller from the bottom part to the rear part thereof, a housing which surrounds a front upper side of the impeller, and end face frames which close ends of the bottom plate and the housing respectively. The end face frames are formed integrally with the casing by extending ends of the metallic housing in the longitudinal direction by a predetermined amount to be longer than the length of the impeller in the axial direction and by folding the extending port toward the end face side of the impeller. The casing is formed by riveting the end face frames and the fitting sections which are formed by folding on both ends in the longitudinal direction of the metallic bottom plate.

However, for mass-producing the aforesaid casings, in each of which the end face frames are formed by folding integrally with the housing, it is necessary to prepare such equipment as a large cutting machine for cutting the housing to have predetermined dimensions and shape including the end face frame portions, a large and heavy press for folding the end face frames, etc., resulting in considerably increased equipment cost. Moreover, concerning the space for installing the cooling fan device in various electric appliances, such requirements as area, length, heat discharging direction are different depending on the type of the appliance, place for installation and other conditions. Under such circumstances, the aforesaid cutting machine, press, etc. should be customer-made to meet aforesaid specific configuration of the housing and end face frames of the cooling fan and it is almost impossible to make the components general-purpose. That is to say, when installing a cooling fan on a different electric appliance, it is necessary to obtain a different cutting machine, press, etc. to manufacture a different casing separately, which is a serious problem in view of equipment cost and efficiency in manufacturing the casings.

From the US-A-3 680 974 as well as JP-U-57-80696 it is known to provide the metallic bottom plate and the metallic housing with continuously extending lips which abut the end face frames and which are connected to said frames by self-tapping screws inserted through openings in the end face frames. A similar way of connecting is disclosed in the JP-U-57-80696, since the bottom plate and the housing are provided with projections which fit into corresponding holes at the end face frames and which are bent in order to fasten the end face frames to the metallic bottom plate as well as the metallic housing. Since the end face frame is a metallic plate, it is difficult to process the same since loosening of the housing and the frames may be prevented only by crimping or or spot-welding or similar methods. The fan uses a wheel comprising a plurality of impellers , each defining an axial direction and being connected to each other in their axial direction with each impeller comprising an end plate section having engaging apertures provided circumferentially in which positioning projections of each plate are fitted. Such a wheel is known from US-A-3 385 511.

JP-U-59-167990 discloses plates which confront each other across a partition part and are mutually deviated in the circumferential direction of the partition part. Usually each plate of a single-piece structure penetrates each partition part to compose a long fan and it is difficult to deviate the plates at the partition part as cited in the reference. Although referred to, the structure is not disclosed in detail.

Accordingly, an object of the present invention is to provide a cross flow type cooling fan device in which high equipment cost as well as complication in manufacturing thereof can be effectively prevented by constructing every component so as to be a general purpose component as much as possible and further to provide the possibility to couple adjacent impellers easily in an alternately staggered structure.

A further object is to provide a cross flow type cooling fan device capable of effectively cooling a control circuit section of a brushless motor without any other cooling system even when the motor is formed into a brushless motor.

A cross flow type fan device according to the present invention comprises a plurality of impellers each defining an axial direction and being connected to each other in their axial direction, with each impeller comprising an end plate section having engaging apertures provided circumferentially in which positioning projections of each blade are fitted; a metallic bottom plate having a length in the axial direction corresponding to that of the connected impellers and fitting sections defined at each end, a metallic housing having a length in the axial direction corresponding to that of the connected impellers and fitting sections defined at each end and said housing surrounding a front upper side of the connected impellers, a pair of end face frames each with fitting means for engaging the fitting end sections at respective ends of the bottom plate and housing, wherein said end face frames are connected to respective ends of the bottom plate and housing with said connected impellers extending between said end frames such, that the bottom plate surrounds the connected impellers from a bottom part to a rear part thereof, wherein each impeller comprises an annular coupling section at one end and an end plate section at the other end in the axial direction with the diameter of the outer peripheral surface of one section being designed to be equal to the diameter of the inner peripheral surface of the other section in such a way that said impellers are pressure-fitted when the sections are engaged with each other and wherein the imepllers are connected with each other in such a way that the blades adjoining each other are arranged to be staggered relative to each other.

In such a construction, since the bottom plate, housing and end face frames are formed so as to be independent of one another, there is no need for obtaining a large cutting machine, large and heavy press, etc., thereby the equipment cost is considerably reduced as compared with the prior art in which the housing including the end frames is cut and formed integrally by folding. Furthermore, for fitting the bottom plate and the housing to the end face frames, the fitting sections, which are integrally formed on the bottom plate and the housing, are engaged with and fixed to the sections to be fitted, which are formed on the end face frames. Accordingly, there is not troublesome work in assembling, in spite of the end face frames being independent of the housing, and thus the bottom plate and the housing are efficiently and easily fitted to the end face frames.

In this connection, it is required for the aforesaid end face frames to be so designed as to have various complicated parts including a bearing section which supports a supporting shaft of the impeller, a motor mounting section, a fitting piece section for fixing the whole cooling fan to an electric appliance and others. But such parts, no matter how complicated, can be integrally formed with ease by composing the aforesaid end face frames of a resin, which also effectively prevents the troublesome work and increase in cost.

By composing the end face frames of a resin, it is easy to form the sections to be fitted, which the fitting sections of the bottom plate and the housing are engaged with and fixed to, in various locations at the time of molding. For example, the bottom and the housing can be fitted to the frames with their locations replaced with each other between front and rear by forming the section to be fitted on the end face frames symmetrically in cross direction. In this manner, even if the direction for discharging heat is different depending on the type and installing place of the electric appliances, the heat discharging direction can be established either in one direction or in the other direction opposite thereto without additionally manufacturing a further bottom plate, housing and end face frames.

It is of advantage that a plurality of impellers are axially coupled and the air blowing slits of the plural impellers adjoining are arranged in staggered relationship with one another. By such construction, there is a time lag in the air blowings out.

Since the bottom plate and the housing are flat, even if the dimensions of a space of an electric appliance for installing the cooling fan are changed, it is not necessary to obtain a different cutting machine, press, etc., it is satisfactory that the bottom plate and the housing are cut by a cutting machine capable of adjusting its length so as to be larger or shorter by a required amount. As a result, there is not need for high equipment cost due to a change in the space for installing the cooling fan in the electric appliance, which is an economical advantage of the invention. Moreover, since it is not necessary to make various casings, the disadvantage of complication in manufacturing the casings is also overcome.

It is further preferable according to the invention that the supporting shaft of the impeller is provided with a power transmission mechanism for transmitting the rotational driving force. By such construction, there arise such advantages that the impeller can be rotationally driven from the driving source provided inside the electric appliance, for example, without providing a motor integrally with the cross flow type cooling fan device, and that the motor can be located separate from the cooling fan so as to meet the configuration of the electric appliance.

It is further preferable according to the invention that the motor for rotationally driving the impeller is incorporated between the end frame and the impeller. By such construction, the cross flow type cooling fan can be small-sized.

It is further preferable according to the invention that, when a brushless motor is disposed on the outside of the end face frame or when a motor incorporated between the end face frame and the impeller is a brushless motor, a control section of the brushless motor is cooled making use of cooling air from the impeller by disposing the control circuit section on one side of the bottom plate. BY such construction, there is no need of providing a cooling device particularly for the control circuit section, which is a further economical advantage of the invention.

BRIEF DESCRIPTION OF THE DRAWINGS

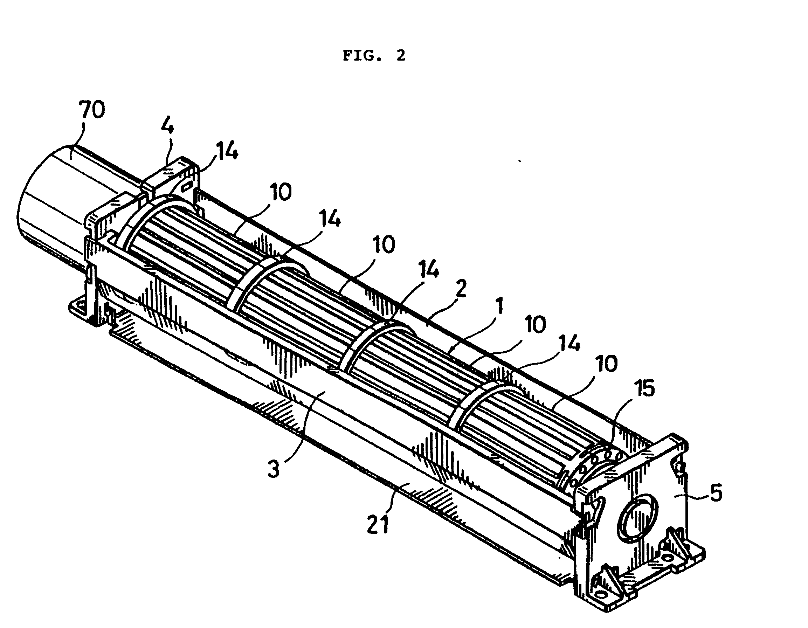

Fig. 1 to Fig. 4 show a preferred embodiment of a casing according to the present invention, and wherein;
Fig. 1 is an exploded perspective view;
Fig. 2 is a perspective view showing an assembled state;
Fig. 3 is a view showing the internal section of one end frame 5;
Fig. 4 is a view showing the external section of the other end face frame 4.
Fig. 5 to Fig. 8 show a construction according to an embodiment of the present invention, in which a motor is included between the end face frame and the impeller and the motor is formed into a brushless motor, and wherein;

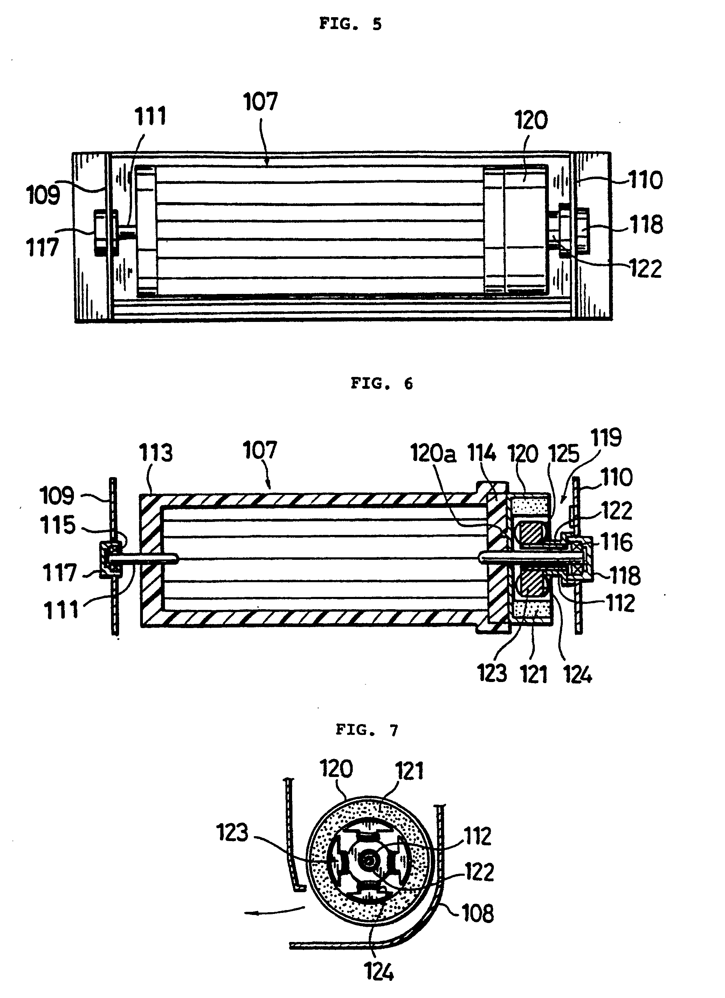

Fig. 5 is a plan view;
Fig. 6 is a longitudinal sectional front view;
Fig. 7 is a longitudinal sectional side view; and

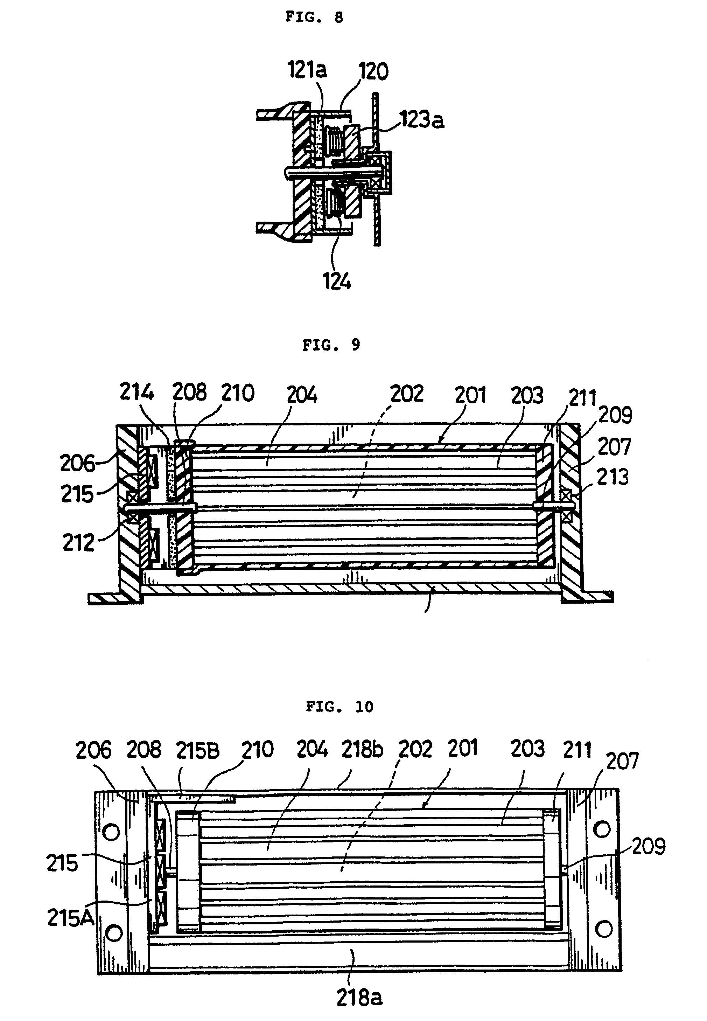

Fig. 8 is a sectional view showing a modification of an essential part.
Fig. 9 to Fig. 16 show another embodiment of the brushless motor, and wherein:
Fig. 9 is a schematic longitudinal sectional front view;
Fig. 10 is a schematic plan view;

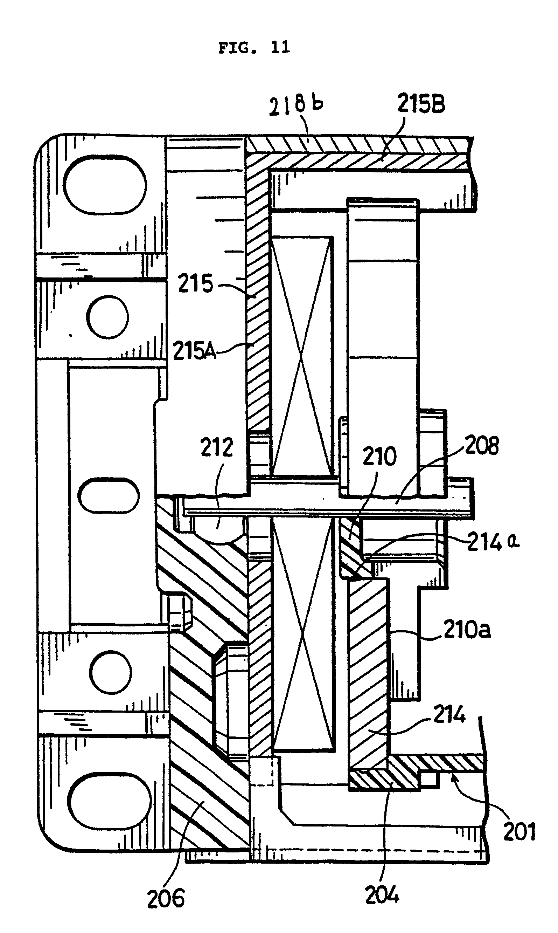

Fig. 11 is a partially cutaway plan view of the essential part;

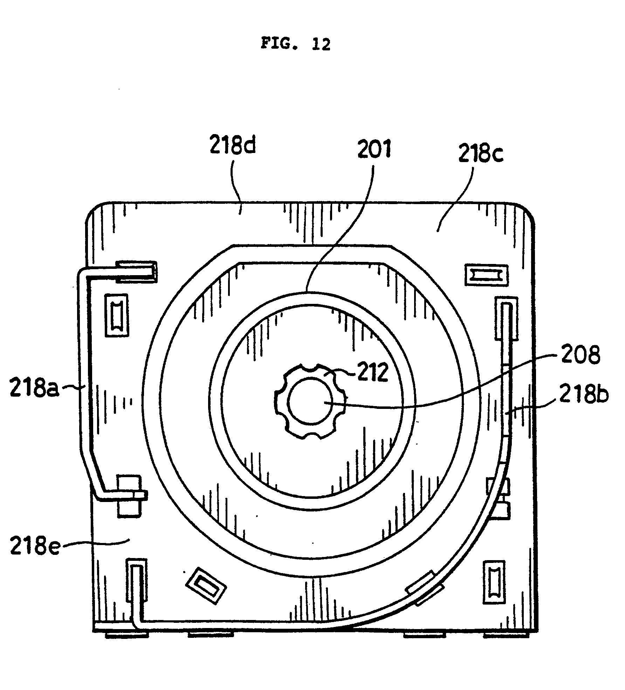

Fig. 12 is a side view;

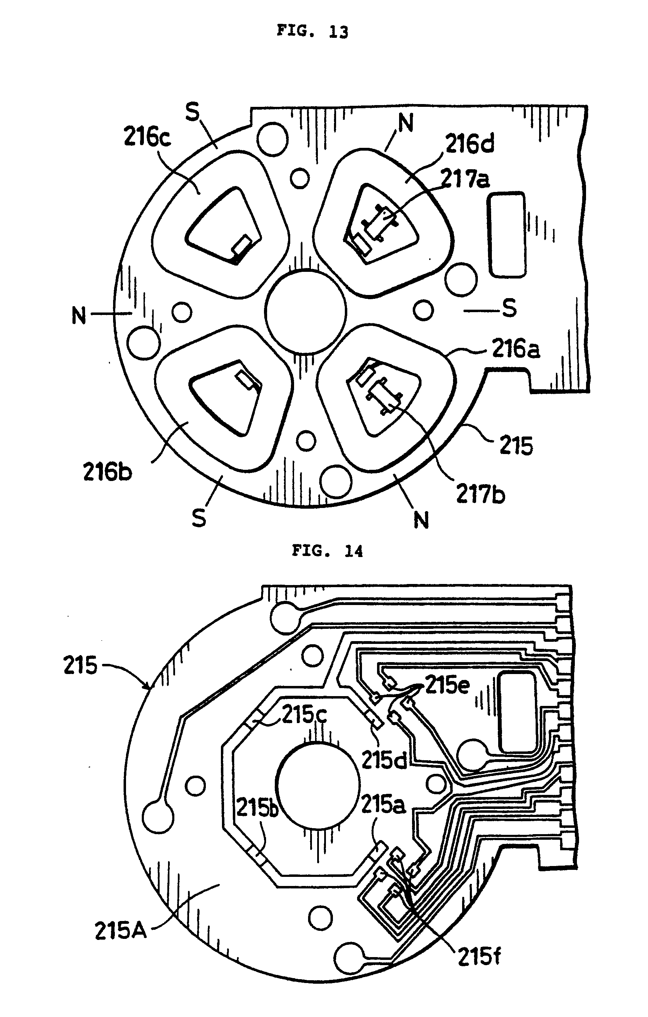

Fig. 13 is a right side view in which field windings and hall devices for detecting a magnetic field are mounted on a printed circuit board;
Fig. 14 is a right side view showing a wiring pattern of the printed circuit board;

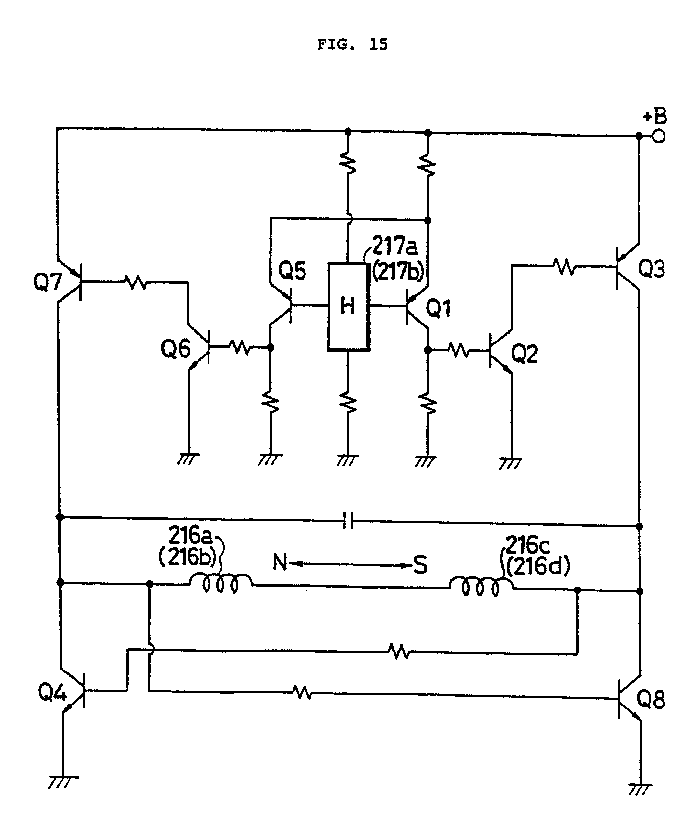

Fig. 15 is an electric circuitry diagram of a control circuit; and

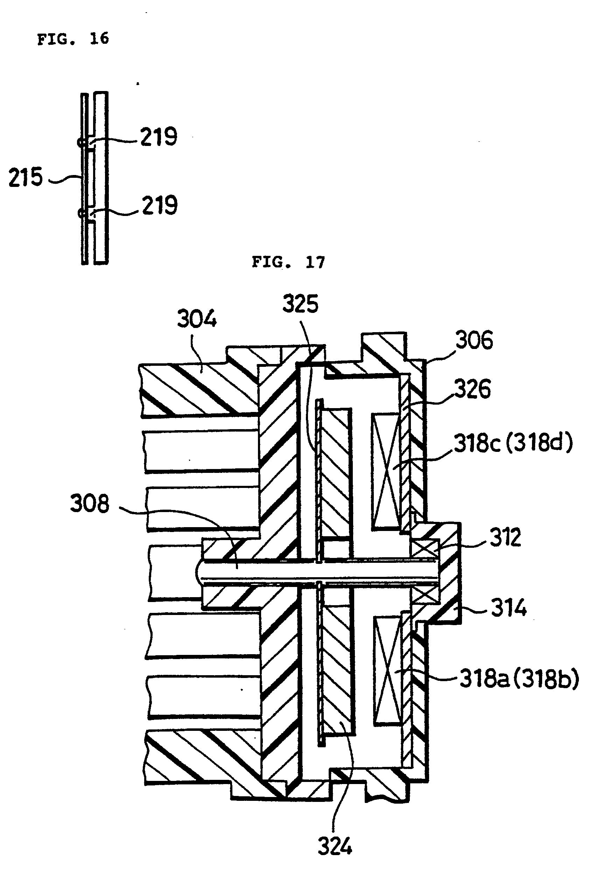

Fig. 16 is a partial front view of a further modification.
Fig. 17 is a sectional view of an essential part of a further embodiment of the brushless motor.

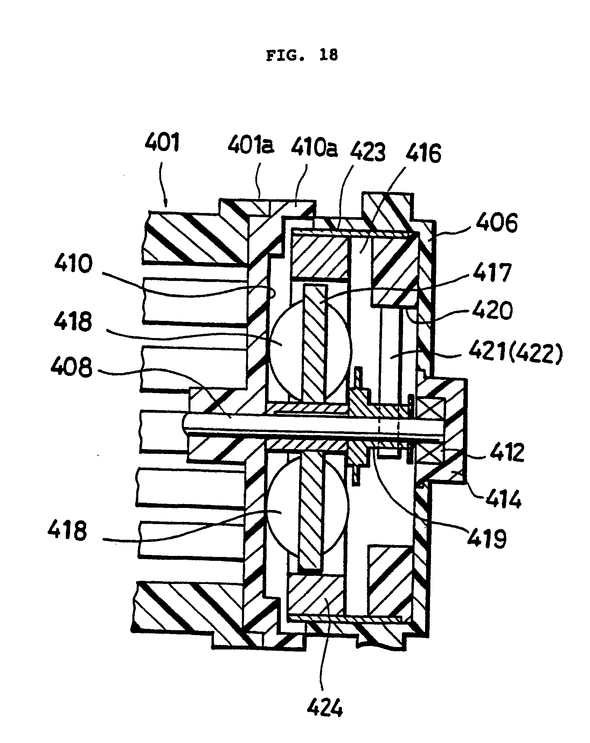

Fig. 18 is a sectional view of an essential part of a construction in which a motor is incorporated between the end face frame and the impeller, and the motor is formed into a motor with brushes.

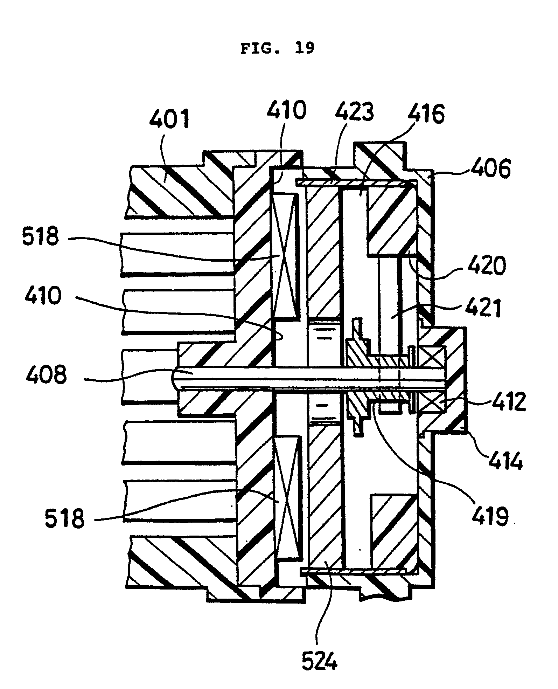

Fig. 19 is a sectional view of an essential part of a construction according to a further embodiment in which a motor with brushes is used.

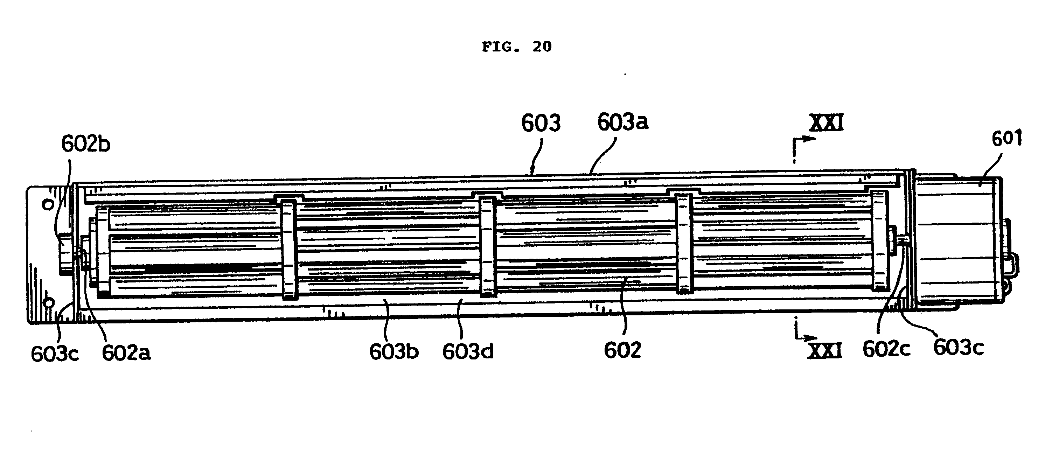

Fig. 20 to Fig. 23 show a further embodiment illustrating the manner of disposing the control circuit of the brushless motor, and wherein:
Fig. 20 is a plan view showing the center portion of a brushless cross flow type cooling fan device;

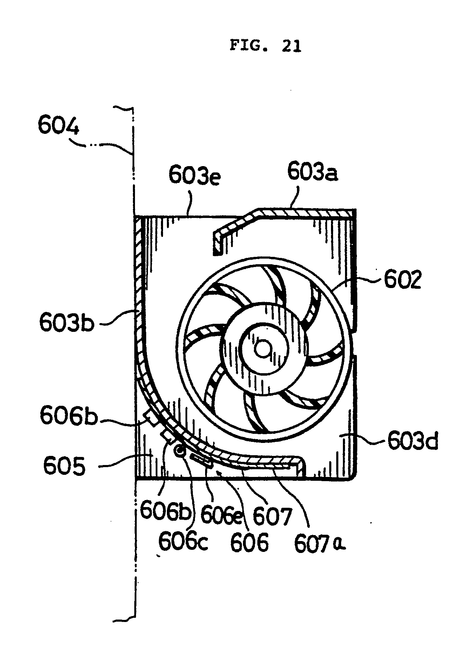

Fig. 21 is a longitudinal sectional view taking along the line XXI-XXI in Fig. 20, and

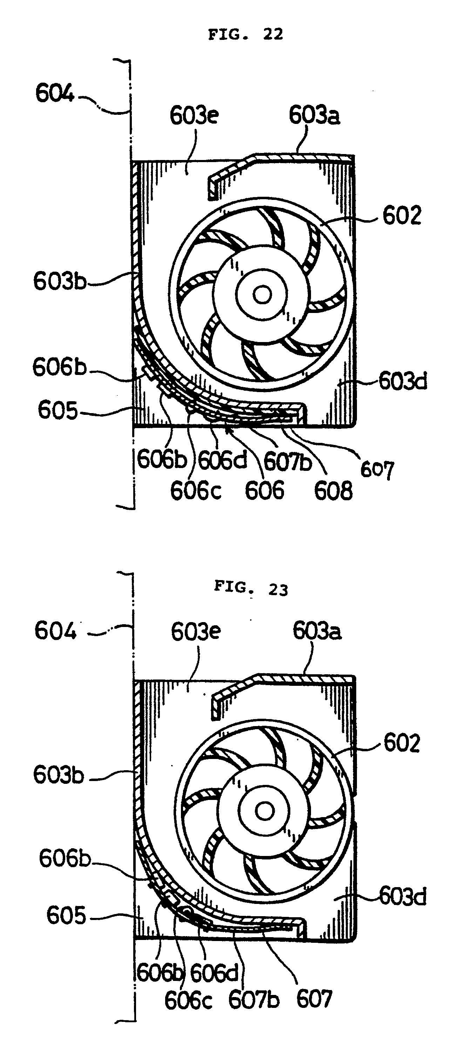

Fig. 22 and Fig. 23 are respectively longitudinal sectional views of a further modification.

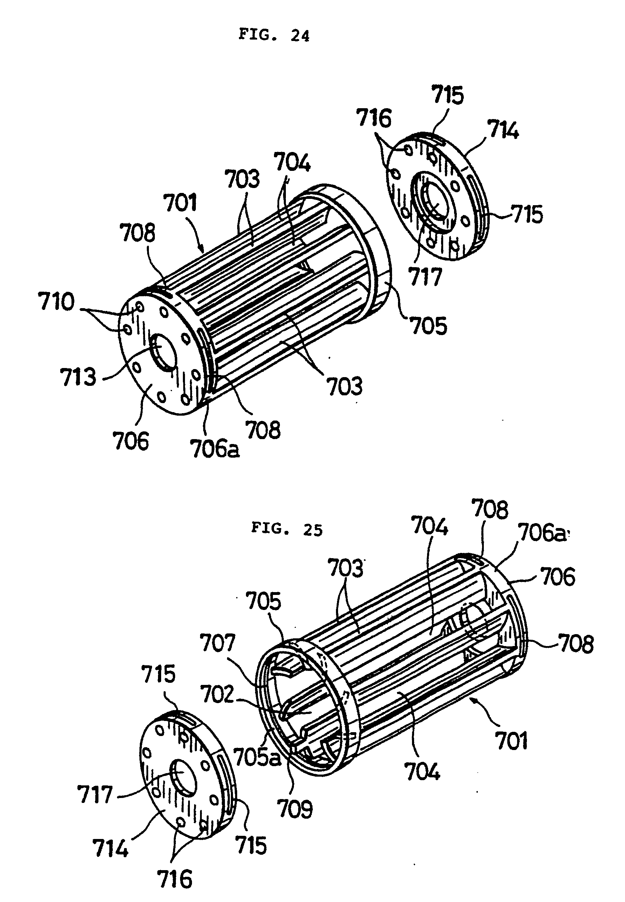

Fig. 24 to Fig. 27 show an embodiment in which plural impellers are coupled and the air blowing slits of the impellers adjoining are arranged in a staggered manner relative to one another, and wherein:
Fig. 24 is a perspective view of an external appearance of the impeller;
Fig. 25 is a perspective view of the external appearance as seen from the opposite side of Fig. 24;

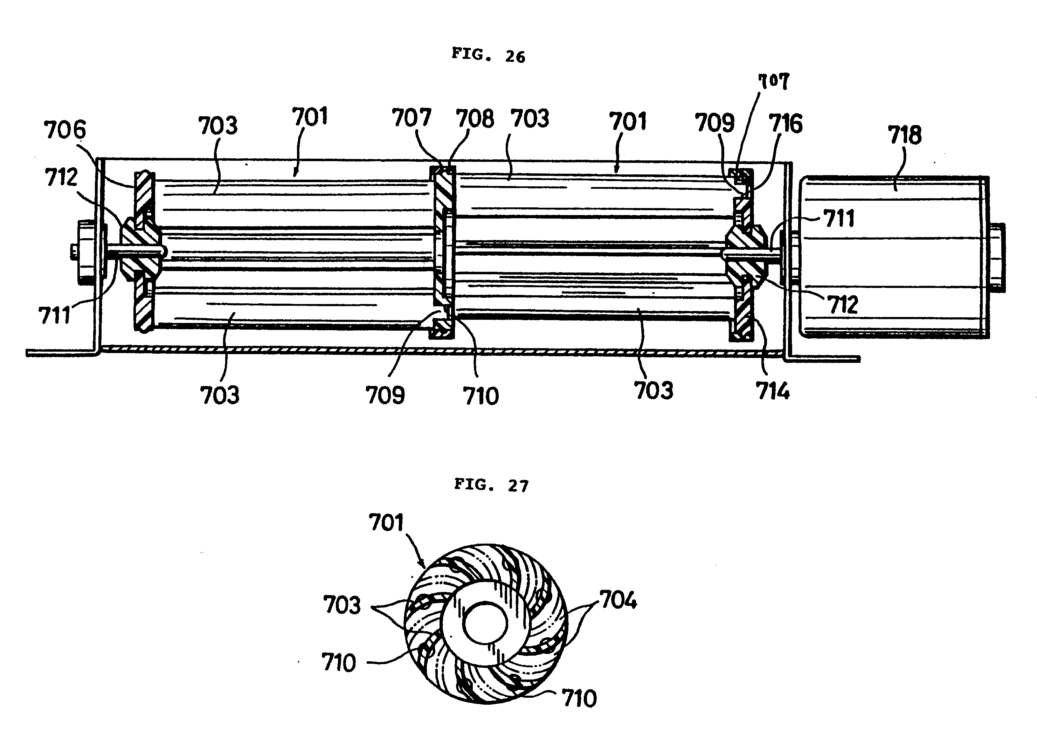

Fig. 26 is a sectional view of an essential part of a cooling fan in which two impellers are used; and
Fig. 27 is a sectional view of the impeller;

Detailed Description of the Preferred Embodiment

(1st Embodiment)

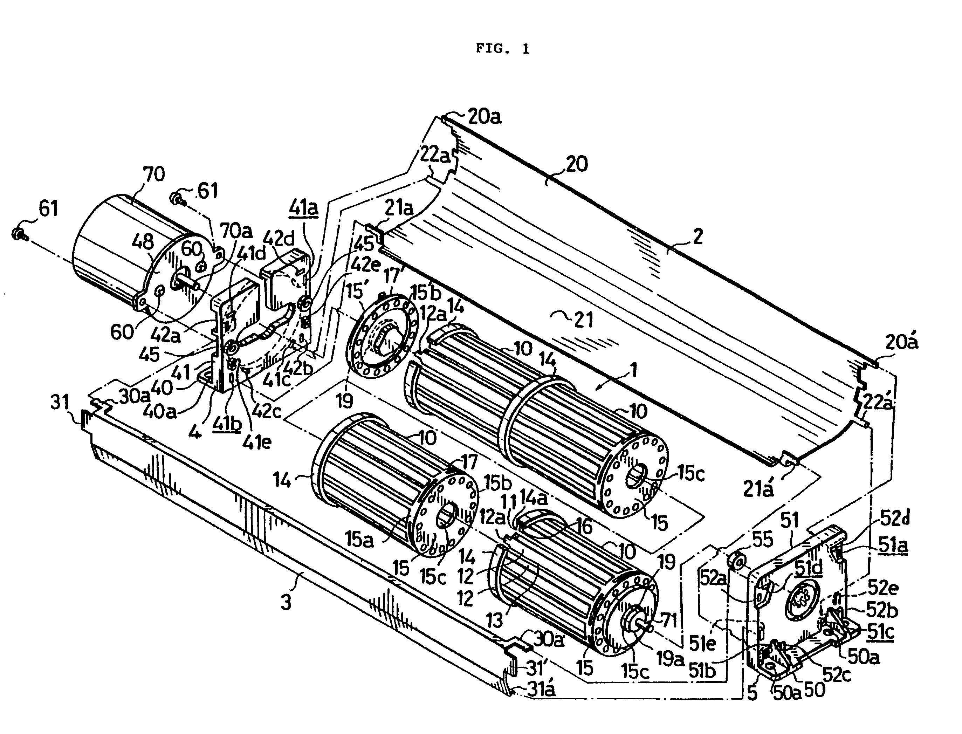

Fig. 1 shows an exploded perspective view of a cross flow type cooling fan device, and in which a reference numeral 1 denotes a cross flow fan which is formed so as to extend with a certain length in the axial direction by connecting a plurality of impellers 10. Each of the impellers 10 is solidly molded of a synthetic resin, and the cylindrical peripheral wall is formed of a plurality of blades 12 disposed at certain distances around a hollow area 11 in the center of the cylindrical body and a plurality of air blowing slits 13 opened between the respective blades 12, 12 adjoining each other. Each of the blades 12 has an inclination of approximately 60 degree with respect to the cylindrical peripheral wall to improve the air blowing efficiency sent from the air blowing slits 13.

The aforesaid group of blades 12 are supported by an annular coupling section 14 at one end in the axial direction, while being supported by an end plate section 15 at the other end in the axial direction. Accordingly, the impeller 10 is formed into an almost cylindrical member with one end face open, and the diameter of the inner peripheral surface 14a being so designed as to be equal to the diameter of the outer peripheral surface 15a of the end plate section 15 to meet the multiple connection of the impellers. Further, a recessed section 16 being annularly or intermittently joining to the aforesaid inner peripheral surface 14a is concavely formed, while a raised section 17 being annularly or intermittently joining to the outer peripheral surface 15a of the end plate section is formed as shown in the drawing. Of course the location of the recessed section 16 and the raised section 17 can be reversed.

In the annular coupling section 14, a positioning projection 12a is provided projecting from the end of the blades 12 an impeller 10, while a plurality of engaging apertures 15b are provided circumferentially on the end plate section 15 at the same radial positions as the projections 12a. In the center of the end plate 15, a circular hole 15c is opened.

For multiple connection of the impellers 10 the end plate section 15 of one impeller 10 is pressure fitted into the annular coupling section 14 so that the recessed section 16 and the raised section 17 of the two members are engaged with each other. At the same time, the positioning projections 12a are inserted in any one of the engaging apertures 15b in the annular coupling section 14.

By the foregoing positioning arrangement, connection between the two impellers is regulated in such manner that the blades 12, 12 adjoining each other, i.e., the adjacent air blowing slits 13, 13 do not stand linearly in a row, but are arranged in a staggered relationship with one another.

In this manner, the two impellers 10 are connected in the axial direction making their length twice as long as one impeller. When necessary to obtain a length three times as long as one impeller, just connecting three impellers 10 is sufficient, thus an impeller connection of a required dimension can be freely arranged.

The annular connecting section 14 of the impeller 10 located at the extremity of the foregoing connection is closed with an auxiliary end plate 15' which is a separate member. For that purpose, the auxiliary end plate 15' is also provided with a raised section 17', to be pressure fitted into the recessed section 16 of the annular coupling section 14, and the engaging apertures 15'b receive corresponding positioning projections 12a. Furthermore, a circular hole (not shown) is also provided in the center of the end plate in the same manner as the end plate section 15. Bearing members 19, 19 with a step of a rubber or the like material are engaged respectively with the circular hole of the auxiliary end plate 15' and the circular hole 15c of the end plate 15 of the impeller 10 located on the opposite end at the time of attaching the auxiliary end plate 15'. A shaft 70a of the motor 70 is then inserted with pressure in the center of one of the bearing members 19, 19, while an impeller supporting shaft 71 is inserted in the center of the other.

In the impellers 10 according to this embodiment, since the air blowing slits 13 are so designed as to be alternately staggered with one another as described above, a time lag is assured between the air blowing from the air blowing slits 13 of one impeller and that from the air blowing slits 13 of the other impeller without interference therebetween.

A reference numeral 2 denotes a bottom plate which surrounds the impellers 10. The bottom plate 2 extending in the axial direction from the bottom part to the rear part. The bottom plate is made of a metallic plate which is formed by cutting and press working so as to have a length almost the same as the connected impellers 10 in the axial direction. On both ends in the longitudinal direction of the end plate, fitting sections 20a, 20a', 21a 21a' and 22a, 22a' each projecting outwardly in the longitudinal direction are solidly formed respectively on the upper end part of the rear wall 20, on the front end part of the bottom wall 21, and on the location between the rear wall 20 and the bottom wall 21.

A reference numeral 3 denotes a housing which surrounds the front upper side of the impellers 10. The housing 3 is also made of a metallic plate formed by cutting and press working so as to have a length almost the same as the connected impellers 10. In the same manner as the bottom plate 2, and on both ends thereof in the longitudinal direction, fitting sections 30a, 30a', 31a (construction of 31a is the same as 31'a, though not shown) each projecting outwardly in the longitudinal direction are solidly formed respectively. Contact plate sections 31, 31'a are further formed solidly on the locations near the upper parts of both ends.

Reference numerals 4, 5 denote end face frames which are disposed on both end faces of the bottom plate 2 and the housing 3 to close both end faces thereof from outside separately. The end face frames 4, 5 are made of a resin and are L-shaped in their front view, and a plurality of fitting apertures 40a, 50a for fitting them to en electric appliance with such fitting means as screws are formed on the bottom parts 40, 50.

Slot-like first sections to be fitted 41a, 41b, 41c, 41d, which fixedly engage the left side fitting sections 20a, 21a, 22a, 30a of the bottom plate 2 and the housing 3 therewith, are formed on the erected wall 41 of the one end face frame 4, while the slot-like first sections to be fitted 51a, 51b, 51c, 51d, which fixedly engage the right side fitting sections 20'a, 21'a, 22'a, 30'a of the bottom plate 2 and the housing 3 therewith, are formed on the erected wall 51 of the other end face frame 5. These two groups of first sections to be fitted being opposed to one another. Furthermore, slot-like second sections to be fitted 42a, 42b, 42c, 42d, which fixedly engage the aforesaid right side fitting sections 20'a, 21'a, 22'a, 30'a therewith, are formed on the erected wall 41 of the one end face frame 4, while the slot-like second sections to be fitted 51a, 51b, 51c, 51d, which fixedly engage the aforesaid left side fitting sections 20'a, 21'a, 22'a, 30'a therewith, are formed on the erected wall 51 of the other end face frame 5, these two groups of second sections being opposed to one another.

Third sections to be fitted 41e, 42e, which are ⊐-shaped in section to fixedly engage the fitting sections 31a or 31'a of the housing 3, are formed on the symmetrical locations on the lower part of the one erected wall 41, while third sections to be fitted 51e, 52e, which are ⊐-shaped in section to fixedly engage the fitting sections 31'a or 31a of the housing 3, are formed on the symmetrical locations on the lower part of the other erected wall 51.

In this manner, for fixedly engaging the left and right fitting sections 20a - 22a, 30a, 20'a -22'a, 30'a of the bottom plate 2 and the housing 3 with the end face frames 4, 5, it is sufficient that first the left and right fitting sections are engagedly inserted with pressure into the corresponding first sections to be fitted 41a - 41d, 51a - 51d or the second sections to be fitted 41a - 42d, 52a - 52d, then the ends of the fitting sections coming out after passing through the sections to be fitted are bent with a tool such as a radio pliers so as not to be removed therefrom. For fixedly engaging the fitting sections 31a, 31'a of the housing 3 with the third sections to be fitted 41e, 51e or 42e, 52e of the end face frames 4, 5 at the same time as the aforesaid engagement and fixation, it is sufficient that the fitting sections 31a, 31'a are thrust into the corresponding sections to be fitted 41e, 51e or 42e, 52e.

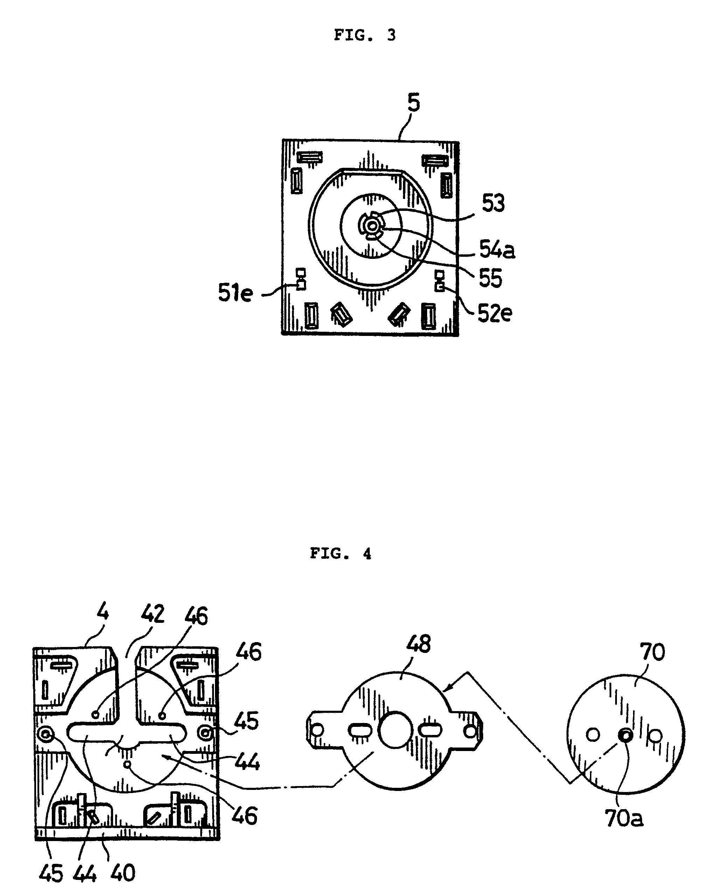

As shown in Fig. 3, an engaging hole 53 is concavely provided in the center of the inside of the other end face frame 5, and a plurality of press-fitting piece sections 54a projecting toward the center direction are formed on the inner peripheral surface of the engaging hole 53. The sliding bearing 55 is pressed against the front ends of the aforesaid press-fitting piece sections 54a so as to be held in the engaging hole 53.

As shown in Fig. 4, a guide opening 42, in which a circular engaging section (not shown) formed on the outside of the aforesaid bearing section 19 with a step is inserted, is formed from the middle part of the upper end to the center part in the end face frame 4, and engaging openings 44, 44 are also formed for engaging heads of the screws 60, 60 through the central part 43 of the end face frame 4 in the longitudinal direction. Screw inserting apertures 45, 45 are further formed on the lateral outsides of the engaging slots 44, 44 for screwing the threaded portions of the tapping screws 61, 61. Bosses 46 for supporting the motor mounting plate 48 are projectingly provided at three positions at equal distances around the center part 43 of the end face frame 4.

Accordingly, when fitting the cross flow fan 1 comprising the connected impellers 10 to the end face frames 4, 5, first the metallic mounting plate 48 is attached to one side of the motor 70 with screws 60, 60, then the rotary shaft 70a of the motor 70 is inserted with pressure into the center part of the bearing member 19 which is fitted to the auxiliary end plate 15' of the cross flow fan 1. Then the smaller diameter part of the bearing member 19 with a step (which is the same member as the smaller diameter part 19a of the bearing member 19 with a step located on the right side) is inserted in the guide opening 42 from the upper end thereof so as to be located at the center part 43 of the end face frame 4. Thereafter, the supporting shaft 71 of the cross flow fan 1 is inserted in the sliding bearing 55 by moving the fan 1 to the other end face frame 5 side, and further the mounting plate 48 is fitted to the outside of the end face frame 4 by screwing the tapping screws 61, 61 into the screwing apertures 45, 45 of the one end face frame 4 passing through the mounting plate 48. Thus the motor 70 is mounted on the end face frame 4.

In such an arrangement, the aforesaid mounting plate 48 is fitted not being fully in contact with the outside of the one end face frame 4, but in contact and received solely with the bosses 46 for supporting the mounting plate of the end face frame 4, Thereby the accuracy in mounting the plate 48, i.e., the motor 70 on the end face frame 4 is considerably improved. To be more specific, If the mounting plate 48 is fitted to the end face frame 4 such that it is fully in contact with the outside thereof, the mounting plate 48 which is supposed to be fitted somewhat inclined due to possible deformation of the outer face of the end face frame 4 which can occur at the time of molding of the frame, the mounting accuracy is seriously lowered. If the mounting plate 48 is inclinedly mounted, the motor 70 is also mounted inclinedly, and the rotary shaft 70a of the motor 70 does extend linearly in a row with respect to the supporting shaft 71 on the right side of the cross flow fan 1, but is in a state fitted to the left bearing member 19 being inclined as such. As the result, a cross flow fan 1 does not rotate smoothly more load than necessary being applied to the motor 70.

On the other hand, by adopting the aforesaid construction in which the bosses 46 for supporting the mounting plate are projectingly provided on the outer surface of the end face frame 4 as is done in this embodiment, it is possible to exactly fit the mounting plate 48 to the outside of the end face frame 4 regardless of the deformation of the outside of the end face frame 4, so far as the bosses 46 are exactly formed to be sufficiently hard to prevent them from deforming. As a result, it is insured that the motor 70 is also exactly fitted enabling the cross flow fan 1 to rotate smoothly. In addition the motor 70 is prevented from the application of unnecessary load.

Since the bottom plate 2, the housing 3 and end face frames 4, 5 are separately formed as described above, it is not necessary to obtain a large cutting machine, a large press, etc., thereby the equipment cost being considerably reduced as compared with the prior art in which the housing and the end face frames are solidly formed by cutting and folding. Moreover, since the fitting of the bottom plate 2 and the housing 3 to the end face frames 4, 5 is carried out by fixedly engaging the fitting sections solidly formed on the bottom plate 2 and the housing 3 with the sections to be fitted formed on the end face frames 4, 5, coupling of the bottom plate and the housing with the end face frames can be easily and efficiently carried out without requiring much labor.

According to the prior art, the aforesaid end face frames 4, 5 have to be formed into a construction provided with various rather complicated parts such as a bearing for the supporting shaft of the cross flow fan 1, a fitting face for the motor, fitting sections for fixing the whole cooling fan to an electric appliance, etc. On the other hand, according to the invention, those parts can be solidly formed with ease by constructing the end face frames 4, 5 of a resin, resulting in the effective prevention from requiring much labor and high cost.

Further, as a result of constructing the end face frames 4, 5 of a resin, the sections to be fitted, with which the fitting sections of the bottom plate 2 and the housing 3 are to be fixedly engaged, can be easily formed at various locations at the time of formation by molding. For example, as is done in the preceding embodiment, by forming the sections to be fitted symmetrically in the longitudinal direction on the end face frames 4, 5, it becomes easy to replace the fitting locations of the bottom plate 2 and the housing 3 with each other even when the heat discharging direction is different depending on the type of the electric appliances, places to be fitted, etc., whereby the members 2 and 3 can be appropriately installed at either of the two locations, front or rear, without preparing any new bottom plate, housing, end face frames.

Since the bottom plate 2 and the housing 3 are formed into plate-like members and the end face frames 4, 5 are arranged independent of the bottom plate and the housing, even if the dimensions of a space for installing the cooling fan of the electric appliance is changed, it is possible to cope with such change by just cutting the bottom plate and the housing with a cutting machine capable of adjusting the length to be longer or shorter by a specified amount without obtaining any other cutting machine, press, etc.

The fitting sections of the bottom plate and the housing are inserted with pressure in the sections of the end face frames to be fitted and engaged therewith. They are fixed by bending as in the foregoing embodiment, but it is also satisfiable that the fitting sections are formed into engaging pins, while forming the sections to be fitted into engaging apertures to achieve engagement and fixation therebetween, or that engagement and fixation are obtained just by inserting with pressure the fitting section in the section to be fitted.

Although the impellers are rotationally driven by the motor 70 in the foregoing embodiment, it is also possible to have a power transmission mechanism provided instead of the motor 70. To be more specific, it is also preferable to adopt such a method in which the impeller 10 is fixed to the supporting shaft, one end of the supporting shaft is passed through the end face frame to be projected outwardly, a rotating member such as pulley, gear, sprocket, etc. is fixed to the projected part, a rotational power transmitting member such as a belt, gear, chain, etc. is fitted to the rotating member, so that the impellers are rotated by supplying the rotational power from a drive source located at a separate position.

Although the motor 70 is disposed outside the end face frame 4 in the foregoing embodiment, it is also possible to have the motor dispoed between the end face frame and the impeller to rotationally drive the impellers.

(2nd Embodiment)

Fig. 5 to Fig. 8 show an embodiment in which a brushless motor is disposed between the impeller and one of the end face frames as rotational driving means of the impeller.

Both ends of the impeller 107 are rotatably supported on the end face frames 109, 110 through the supporting shafts 111, 112. Each supporting shaft 111, 112 passes through the end plate sections 113, 114 and is fixed to the end plate sections 113, 114 at both ends of the impeller, and supported on the end face frames 109, 110 through the bearings 115, 116. Reference numerals 117, 118 denote bearing cases.

A predetermined gap 119 is established between one end of the impeller 107 and the end face frame 110 corresponding thereto, and a yoke 120 fixed to the end plate section 114 is arranged in the gap 119. The yoke 120 is fixed to the end plate section 114 by engaging with pressure a pin projection 120a projecting from the yoke 120 side with a hole recessed on the end plate side 114. A ring magnet 121 is fixedly mounted by an adhesive or the like inside the yoke coaxially with the supporting shaft 112

The supporting shaft 112 is covered with an outer casing 122, which is externally mounted on the bearing casing 118 to be fixed to the end face frame 110. Further, an iron core 123, which is coaxially and freely fitted in the ring magnet 121, is mounted on the outer casing 122, and the field winding 124 is wound around the aforesaid iron core 123. A hall device 125 is attached to a part of the iron core 123. The hall device 125 detects the magnetic field of the rotating ring magnet 121 and controls the application of current to the field winding 124.

In the above construction, the impeller 107 is rotated by the application of current to the field winding 124 and by the cooperative operation between a magnetic field induced in the iron core 123 due to on-off control of the field winding and another magnetic field of the ring magnet 121.

It is also preferable that, as shown in Fig. 8, the iron core 123a is designed in such a manner that the ring magnet 121 is laminated and mounted on the erected wall surface of the yoke 120, to generate a magnetic field corresponding to the ring magnet 121a. It is further preferable that the ring magnet 121 is arranged on the outer casing 122 side, while the iron core 123 is arranged on the impeller 107 side. In this construction, a slip ring is used to feed power to the rotating winding 124.

According to the construction described above, instead of using any additional motor to be connected to the impeller as a rotational driving means thereof as is done in the prior art, the impeller is rotated by the ring magnet, iron core and field winding substantially performing a motor function between the impeller and an end face frame thereof. As a result, the cross flow type cooling fan device is small-sized and the space for installation thereof is reduced, thereby compact electric appliances can be designed.

(3rd Embodiment)

Fig. 9 to Fig. 16 show another embodiment, in which a brushless motor is disposed between the impeller and the end face frame.

Referring to Fig. 9 to Fig. 11, a recess 210a is formed on the end face 210 of the impeller. A flat ring-shaped magnet 214 is inserted with pressure in the recess 210a, and a group of blades 204 are formed on the outer peripheral surface of the magnet 214 which is mounted in the impeller 201. The inner periphery of the magnet 214 is formed into a smaller diameter face 214a for easy insertion with pressure, and the flat magnet 214 is prevented from being broken due to the elasticity of the end face 210 of the impeller made of a synthetic resin.

Meanwhile, a printed circuit board 215 is disposed on the inner surface of the end face frame 206 confronting the magnet 214. A wiring pattern of the driving circuit as shown in Fig. 14 is printed on a substrate of a silicon steel plate. In the wiring pattern, coil conneting section 215a - 215d for the field windings are formed at four places, and hall device connecting sections 215e, 215f for magnetic field detection are formed at two places. As shown in Fig. 13, flat and almost triangular field windings 216a - 216d having no iron core are connected to each of the coil connecting section 215a - 215d of the printed circuit board 215, and hall devices 217a, 217b are connected to each of the hall device connecting section 215e, 215f. In the printed circuit board 215, a control circuit section 215B is curvedly and extensively provided in addition to the aforesaid driving circuit section 215A. The magnet 214 has six poles, each of the three south poles (hereinafter referred to as "S-pole" or "S-poles") being opposed to each three north poles (hereinafter referred to as "N-pole" or "N-poles") as shown in Fig. 13.

The casing for accommodating the impeller 201 comprises, as shown in Fig. 12, an almost flat housing 218a, an air guide plate 218b which is curved from the rear part to the bottom part forming a circular arc concentrical with the impeller 201 and a pair of supporting frames 218c, and in which a wide air suction opening 218d is formed on the upper part, while an air discharge opening 218e is formed on one side, and the control circuit section 215B for the aforementioned printed circuit board 215 is disposed on the inner surface of the the air guide plate 218b.

Referring now to Fig. 15, operation of the device of the above construction according to the embodiment is described hereunder. In this connection, there are provided two circuits corresponding to the hall devices 217a, 217b for magnetic field detection in Fig. 15, but the following description is illustratively made with respect to one of the circuits shown in Fig. 15.

When the N-pole of the magnet 214 is detected by the hall device 217a for magnetic field detection, the 1st transistor Q1 of a PNP type is on by the hall device 217a, then the 2nd to 4th transistors Q2 -Q4 are respectively on, and electric current flows in the direction of the arrow N from the power source +B to the field windings 216a, 216c by way of the 3rd and 4th transistors Q3, Q4. Thus, the magnetic field of the N-pole is induced in each field winding 216a, 216c, and the magnet 214, i.e., the impeller 201 is rotated by the attractive force and the repulsive force between the N-pole and the S-pole. When the hall device 217b detects the S-pole of the magnet 214 during rotation, the 5th transistor Q5 is on, thereby the 6th to 8th transistors Q6 - Q8 are respectively on, and the electric current flows in the direction of the arrow S to the field windings 216b, 216d by way of the 7th to 8th transistors Q7, Q8. Thus, the magnetic field of the S-pole is induced in each field winding 216b, 216d, generating, thereby the attractive force and repulsive force therebetween and the magnet 214 is further rotated.

When the S-pole of the magnet 214 is detected by the hall device 217a, the 5th transistor Q5 of a PNP type is on by the hall device 217a, then the 6th to 8th transistors Q6 - Q8 are respectively on, and the currrent flows in the direction of the arrow S from the power source +B to the field windings 216a, 216c by way of the 7th and 8th transistors Q7, Q8. Thus, the magnetic field of the S-pole is induced in each field winding 216a, 216c, and the magnet 214, i.e., the impeller 201 is rotated by the attractive force and the repulsive force therebetween. When the hall device 217b detects the N-pole of the magnet 214 during rotation, the 1st transistor Q1 is on, thereby the 2nd to 4th transistors Q2 - Q4 are respectively on, and the current flows in the direction of the arrow N to the field windings 216b, 216d by way of the 3rd to 4th transistors Q3, Q4. Thus, the magnetic field of the S-pole is induced in each field winding 216b, 216d, generating thereby the attractive force and repulsive force therebetween and the magnet 214 is further rotated. The same operation is repeated thereafter to keep the impeller 201 rotating.

In the operation, since the printed circuit board 215 in which the field windings 216a - 216d are disposed are formed of silicon steel plate, core loss is reduced. The control of the application of current to each field coil 216a - 216d in accordance with the field detection of the magnet 214 by the aforementioned hall devices 217a, 217b is carried out by the control circuit section 215B of the printed circuit board 215.

In this manner, motor function is substantially performed by the magnet 214 and each field winding 216a - 216d, and therefore any additional brushless motor to be used as driving means for the impeller 201 is no longer necessary. Further, the brushless motor section is composed of the flat field windings 216a - 216d without iron core, the magnet 214 and the printed circuit board 215, and the magnet 214 is mounted inside the impeller 201. Therefore, the motor section can be greatly reduced in size. Moreover, since the field windings 216a - 216d are disposed on the printed circuit board 215, it is possible to use a sheet coil and to provide the field windings 216a - 216d and the hall devices 217a, 217b on the same driving circuit section 215A of the printed circuit board 215.

If the driving circuit section 215A and the control circuit section 215B are separately provided, such troublesome work as soldering these sections for connection to each other will be needed, and such other components as lead wire, connectors will be further necessary, thereby rendering compact design impossible. Such a problem is overcome by forming the driving circuit section 215A and the control circuit section 215B integrally on the printed circuit board 215 in this embodiment. Besides, there is no dead space in practical use by disposing the control circuit section 215B inside the air guide plate 218b. Integration is further improved by using a double side printed circuit board as the printed circuit board 215. The same advantage can be attained by using a flexible board as the printed circuit board 215 or by disposing the control circuit section 215B of the printed circuit board 215 on the outer surface of the end face frame or by wiring the driving circuit section and the control circuit section formed on separate boards through a folding type connector. In Fig. 16, attaching bosses 219 are provided in the places for attaching such a board as an end face frame, air guide plate, etc. By inserting the bosses 219 through into fitting apertures formed on the printed circuit board 215 and compressively flattening the top ends of the bosses 219 by heating, perfect insulation is obtained without any insulating sheet or the like, and a firm fitting is achieved.

Under certain circumstances, only one hall device 217a or 217b for magnetic field detection may be sufficient for the purpose. The magnet 214 can be also provided inside the end face 210 of the impleller. Further, the number of poles of the magnet 214 and field windings 216a - 216d can be freely selected as a matter of course.

In addition, the magnet 214 for the motor is disposed on the end face side of the impeller 201 in the foregoing embodiment, but it is also possible that, as shown in Fig. 17, for the magnets 324 ... for the motor to be mounted on the supporting shaft 308. In such a construction, a holding member 325 alone is fixed to the supporting shaft 308 held on the end face frame 306, and the magnet 324 for the motor is mounted on the supporting member 325. The field windings 318a - 318d for the motor are connected, at equal distances in the circumferential direction, to each of the coil connecting sections (not shown) of the same printed circuit board 326 as the foregoing embodiment and disposed inside the holding frame 306. The remaining construction is the same as the foregoing embodiment. The impeller 304 can be rotationally driven by the aforementioned brushless motor method also in such construction. In the drawing, numeral 312 denotes a bearing.

As described above, the impeller is rotated by disposing the magnet and the field windings substantially performing a motor function between the impeller and the end face frame, and the magnet is laminated as thin as possible to be disposed inside the impeller or around the supporting shaft. Furthermore, since the flat field windings without an iron core are disposed on the same printed circuit board together with the magnetic field detecting devices, the cooling fan device can be made considerably thinner small-sized and lightweight, and space for installment can be greatly reduced. As a result, quite compact electic appliances can be successfully designed.

In this connection, the field windings used in the embodiment described above are of coils without an iron core, but coils with iron cores can also be used as a matter of course. In this case, the magnet for the motor is satisfiably held confronting the iron core. (4th Embodiment)

Fig. 18 shows an embodiment in which a motor with brushes is disposed between the impeller and the end face frame.

In this embodiment, in the gap 416 formed between the end face frame 406 and the end face 410 of the impeller 401, the iron core 417 is fixed to the supporting shaft 408, and the winding 418 for the motor is wound around the iron core 417. The winding 418 is held on the supporting shaft 408 by the iron core 417. A rectifier 419 is engaged with the supporting shaft 408 outward from the iron core 417, i.e., on the bearing 412 side, and a rectifying piece (not shown) of the rectifier 419 is connected to the winding 418 for the motor. Meanwhile, a mount 420 is fixed on the inner peripheral side of the end face frame 406, and a pair of brushes 421, 422 are supported on the mount 420 so as to come in contact with the rectifier 419 at symmetrical positions respectively. Power is supplied from a power source to the area between the pair of brushes 421, 422 by way of a lead wire (not shown) provided through the end frame 406.

A cylindrical frame 423 of a magnetic material is mounted on the inner peripheral surface of the peripheral wall of the end face frame 406 being held between the wall and the mount 420. An annular magnet 424 for the motor with its N-pole and S-pole alternately arranged is fixed at the position inside the frame 423 and confronting the iron core 417. The frame 423 is mounted on the end frame 406 facing the inner peripheral side of the peripheral wall 410a formed on the edge of the end face 410 of the impeller, thereby preventing dust entering the gap 416.

The frame 423 is preferably to be of a magnetic material in view of reducing magnetic resistance, but non-magnetic material is also satisfiable. The magnet 424 for the motor is not limited to being annular but any other shaped magnet divided into N-pole and S-pole and held on a non-magnetic material is also applicable. Moreover, the number of poles can be freely selected in the same way as the winding for the motor.

According to the cross flow type cooling fan device of the above composition, the supporting shaft 408, i.e., the impeller 401 is rotated by the attraction and repulsion due to the electromagnetic force which is generated when supplying power from the power source to the area between the brushes 421, 422 and applying electric current to the field winding 418, and due to the electromagnetic force of the magnet 424 for the motor. (5th Embodiment)

Fig. 19 shows a further embodiment in which a motor having brushes is disposed between the impeller and the end face frame.

In this embodiment, in the same manner as the foregoing 3rd embodiment, the field winding for the motor is held on the supporting shaft 408, and the magnet for the motor is held on the end face frame 406. In Fig. 19, a flat winding 518 without an iron core connected to the rectifier 419 is mounted on the end face 410 of the impeller 401, while a flat disc magnet 524 for the motor is mounted on the frame 423 confronting the aforesaid winding 518 for the motor. That is to say, the winding 518 for the motor is held on the end face 410 of the impeller in this embodiment. The remaining construction is the same as the foregoing embodiment shown in Fig. 18, and the same reference numerals are designated for like parts. The operation to rotate the impeller 401 is the same as the foregoing 3rd embodiment as a matter of course.

(6th Embodiment)

Fig. 16 to Fig. 23 show an embodiment in which the control circuit section of the brushless motor is disposed on one side of the air guide plate.

A reference numeral 601 denotes a casing for a motor including a brushless motor, which is fitted to the outside of the end face frame 603c by screws or the like. The impeller 602 is accommodated in a casing 603 so as to be freely rotated by the supporting shaft 602a, bearing 602b and the driving shaft 602c of the brushless motor in the same manner as each of the foregoing embodiments.

As shown in Fig. 20 and Fig. 21, the casing 603 comprises an almost flat housing 603a, an air guide plate 603b whose middle part is curved forming a circular arc concentrical with the impeller 602, and a pair of end face frames 603c, 603c, and in which a wide air suction opening 603d is formed on one side, while an air discharge opening 603e is formed on the other side. A flexible board 607 is attached to the outside of the air guide plate 603b forming a circular arc by an adhesive or the like.

The casing 603 of the above composition is attached to a chassis 604 of a main body of such apparatus as a copying machine, electromagnetic cooking table, personal computer, wordprocessor, etc., and a space 605 is formed between the air guide plate 603b and the chassis 604. The control circuit section 606 including electronic components is disposed in the space 605. The control circuit section 606 comprises chipped transistors 606b, a resistor 606c, a condensor 606d, diode 606e, etc., each welded to the surface 607a of the flexible board 607. With regard to the manner of attaching the flexible board 607 to the outside of the air guide plate 603b and the manner of fitting the electronic components 606b - 606e to the flexible board 607, as shown in Fig. 18 for example, first an insulating sheet 608 (e.g., a resin sheet) is adhered to the external surface of the air guide plate 603b, then the flexible board 607, to the back side 607b of which the lead section of the electronic components 606b - 606e of the control circuit section 606 is welded, is attached to the insulating sheet 608 with any fixing means such as an adhesive. This manner is useful particularly when the flexible board 607 is welded at the back side 607b thereof.

With regard to the manner of attaching the flexible board 607 to the outside of the air guide plate 603b and the manner of fitting the electronic components 606b - 606e to the flexible board 607. It is also possible that, as shown in Fig. 23, for the flexible board 607, to the back side 607b of which the lead section of the electronic components 606b - 606e is welded, is added to the external surface of the air guide plate 603b by the adhesive, so that an electronic components 606b - 606e are in contact with the external surface of the air guide plate 603b or located near thereto.

By such a construction, since the electronic components 606b - 606e of the control circuit section 606 are in contact with or located near the air guide plate 603b, the electronic component 606b - 606e are cooled by the air guide plate 603b which is cooled by the air sent from the impeller 602. Thus, the electronic components are effectively prevented from being damaged due to thermal influence, and durability and reliability of the brushless cross flow type cooling fan device can be considerably improved.

In the construction described above, when the brushless motor is rotationally driven by switching on the control circuit section 606 which controls the switching of the brushless motor and feeding the power to the brushless motor driving section from the control circuit section 606, the impeller 602 accommodated in the casing 603 is rotated, thereby air is taken through the wide opening 603d and is discharged through the narrow opening 603e in the casing 603. Since the control circuit section 606 is disposed in the space 605 separated from the brushless motor, the electronic components 606b - 606e are prevented from thermal influence at the time of driving the brushless motor. As a result, durability and reliability of the brushless motor, in other words, durability and reliability of the brushless cross flow type cooling fan device can be improved.

In this connection, although the brushless motor is disposed outside the end face frame in this embodiment, it is also satisfiable that the control circuit section of the brushless motor used in the foregoing 2nd and 3rd Embodiments is disposed outside the bottom plate as is done in this embodiment.

(7th Embodiment)

Fig. 24 - 27 show an embodiment in which air blowing efficiency is improved, when a plurality of impellers are connected in the axial direction.

The impeller 701 shown in Fig. 24 and Fig. 25 is solidly formed of a synthetic resin, and the cylindrical peripheral wall comprises a plurality of blades 703 disposed with certain distances around the hollow area 702 in the center of the cyclindrical body, and a plurality of air blowing slits 704 opened between the respective blades 703, 703 adjoining each other. Each blade 703 has an inclination of approximately 60 degrees with respect to the cylindrical peripheral wall to improve the air blowing efficiency from the air blowing slits 704.

The aforesaid group of blades 703 are supported by the annular coupling section 705 at one end, while by the end plate section 706 at the other end. Accordingly, the impeller 701 is designed to be an almost cylindrical member with its one end open, and the diameter of the inner peripheral surface 705a of the annular connecting section 705 is so established as to be equal to the outer peripheral surface 706a of the end plate section 706 to meet the multiple connection of the impellers. Further, a recessed section 707 is annularly or intermittently joined to the aforesaid inner peripheral surface 705a which is concavely formed, while a raised section 708 is annularly or intermittently joining to the outer peripheral surface 706b of the end plate section which is formed as shown in the drawing. Of course the location of the recessed section 707 and the raised section 708 can be replaced with each other.

In the annular connecting section 705, a positioning projection 709 shown in Fig. 25 is provided which projects from the end of one blade 703, while a plurality of engaging apertures 710 are provided circumferentially on the end plate section 706 at the same radial positions as the projections 709. In the center of the end plate 706, a circular hole 713 is opened to engage a bearing member of the supporting shaft described later therewith.

As shown in Fig. 26, for the multiple connection of the impellers, the end plate section 706 of one impeller is inserted with pressure in the annular coupling section 705 of the other impeller so that the recessed section 707 and the raised section 708 of both impellers are engaged with each other. At this time, the positioning projection 709 is inserted in any one of the engaging apertures 710 in the annular connecting section 705.

By the aforesaid positioning arrangement, connection between the two impellers is regulated in such a manner that the blades 703, 703 adjoining each other, i.e., the adjacent air blowing slits 704, 704 do not stand linearly in a row in the axial direction, but are arranged in a staggered relationship with one another as is shown in a relation between the solid line and broken line in Fig. 27.

In this manner, the two impellers are connected in the axial direction making their length twice as long as one impeller. When necessary to obtain a length three times as long as one impeller, just connecting three impellers is sufficient, thus the impeller connection of required dimensions can be freely arranged.

The annular connecting section 705 of the impeller located at the extremity of the foregoing connection is closed with the auxiliary end plate 714 which is a separate member. Accordingly, the auxiliary end plate 714 is also provided with the raised section 715 to be fitted with pressure in the recessed section 707 of the annular coupling section 705, the engaging apertures 716 corresponding to the positioning projection 709, and a circular hole 717 in the center part in the same manner as the end plate section 706. Bearing members 712, 712 made of rubber or the like material are respectively engaged with the circular hole 717 of the auxiliary end plate 714 and with the circular hole 713 of the end plate 705 of the impeller on the opposite side when attaching the auxiliary end plate 714, then the bearing members 712, 712 are supported by the supporting shafts 711, 711 (one of the supporting shafts is a shaft for the motor 718), thus the cross flow type cooling fan device as shown in Fig. 26 is constructed.

In the cooling fan device according to this embodiment, since the air blowing slits 704 are so disposed as to be alternately staggered with one another as described above, a time lag is assured between the air blowing from the air blowing slits 704 of one impeller and that from the air blowing slits 704 of the other impeller, without interference therebetween.

As has been explicit from the above description, when assembling a cooling fan in a form of multiple connection, the connection between one impeller and the other can be carried out very simply at a touch, i.e., by engaging with pressure the raised section with the recessed section, moreover the centering is automatically carried out as a result of such engagement. Accordingly, cooling fans of high accuracy can be mass-produced at reasonable cost. Furthermore, since centering accuracy is improved, the cooling device is well-balanced in the rotation. Moreover, disassembling becomes easy resulting in easy maintenance thereof.

In addition, since the positional relation in the connection between the two impellers is automatically regulated just by engaging the positioning projection with the engaging apertures, labor necessary for the regulation is saved, and interference among the laminar air flows sent from each impeller is prevented, thereby pulsation loss is eliminated.

INDUSTRIAL APPLICABILITY

As has been described so far, the cross flow type cooling fan device according to the present invention is applicable to the internal cooling system of audio amplifiers, microcomputers, wordprocessors, copying machines, electromagnetic appliances, etc., and in particular under the recent trend of a variety of spaces for installing the cooling fan, the invention is preferably applicable when it is desirable for the equipment cost to be as small as possible.

**Claims**

1. A cross flow type cooling fan device, comprising:

   - a plurality of impellers (10) each defining an axial direction and being connected to each other in their axial direction, with each impeller comprising an end plate section (15; 706) having engaging apertures 156 provided circumferentially in which positioning projections (12a) of each blade (12; 703) are fitted;

   - a metallic bottom plate (2) having a length in the axial direction corresponding to that of the connected impellers (10) and fitting sections (20a', 21a' , 22a') defined at each end;

   - a metallic housing (3) having a length in the axial direction corresponding to that of the connected impellers (19) and fitting sections (30a, 30a', 31a') defined at each end and said housing (3) surrounding a front upper side of the connected impellers (19);

- a pair of end face frames (4, 5) each with fitting means (41a, 41b, 41c, 41d, 51a, 51b, 51c, 51d) for engaging the fitting end sections at respective ends of the bottom plate and housing, wherein:
- said end face frames (4, 5) are connected to respective ends of the bottom plate (2) and housing (3) with said connected impellers (10) extending between said end face frames (4, 5) such, that the bottom plate (2) surrounds the connected impellers from a bottom part to a rear part thereof,

  **characterized** in that

- each impeller (10; 701) comprises an annular coupling section (14; 705) at one end and an end plate section (15; 706) at the other end in the axial direction with the diameter of the outer peripheral surface of end plate section (15) being designed to be equal to the diameter of the inner peripheral surface (705a) of the annular coupling section (14) in such a way that said impellers are pressure-fitted when the sections (14, 15) are engaged with each other,
- and that the impellers (10) are connected with each other in such a way that the blades (12) adjoining each other are arranged to be staggered relative to each other.

2. A cross flow type cooling fan device as defined in claim 1,
   **characterized** in that the end plate section (15) comprises raised sections (108) at the outer peripheral surface (706a) whereas the coupling section comprises a recessed section (707) at the inner peripheral surface (705a) for annularly locking enganging impellers.

3. A cross flow type cooling fan device as defined in claim 1 or 2,
   **characterized** in that at least the end plate section (15) and the coupling section (14) consist of resin material.

4. A cross flow type cooling fan device as defined in claims 1 to 3,
   **characterized** in that the coupling section (14) of the last impeller located at the open end of the connected impellers (10) is closed by an auxialiary end plate (15') which also comprises raised sections (17') for press-fitting the end plate into the recessed section (16) of the annular coupling section (14) with at least one engaging aperture (15') receiving a corresponding positioning projection (12a).

5. A cross flow type cooling fan device according to anyone of claims 1 to 4,
   **characterized** in that a casing (120; 306; 406) of a brushless motor is connected to the end plate (114; 310; 410).

6. A cross flow type cooling fan device according to claim 5,
   **characterized** in that the brushless motor has a control circuit section (607) disposed on one side of the bottom plate (2; 603b) so that it is cooled by the cooling air from the associated impeller (10).

7. A cross flow type cooling fan device according to anyone of claims 1 to 4,
   **characterized** in that the motor (120, 125) is disposed between the end face frame (110) and its associated impeller (107) for rotating the impellers.

**Revendications**

1. Ventilateur de refroidissement à flux transversal, comprenant :
   - une multiplicité de turbines (10), définissant chacune une direction axiale et raccordées les unes aux autres dans leur direction axiale, chaque turbine comportant un flasque (15;706) ayant des ouvertures coopérantes (15b) réparties circonférentiellement, ouvertures dans lesquelles se logent des saillies de positionnement (12a) de chaque aube ;
   - une tôle de fond métallique (2) ayant dans la direction axiale une longueur correspondant à celle des turbines raccordées (10) et des sections de montage (20a',21a',22a') définies à chaque extrémité ;
   - une tôle de carter métallique (3) ayant dans la direction axiale une longueur correspondant à celle des turbines raccordées (10) et des sections de montage (30a,30a',31a') définies à chaque extrémité, cette tôle de carter (3) entourant le côté supérieur frontal des turbines raccordées (10) ;
   - deux cadres terminaux (4,5), chacun avec des moyens de montage (41a,41b,41c,41d,51a,51b,51c,51d) pour coopérer avec les sections terminales de montage aux extrémités respectives de la plaque de fond et de la plaque de carter, les cadres terminaux (4,5) étant raccordés aux extrémités respectives de la tôle de fond (2) et de la tôle de carter (3), avec les turbines raccordées (10) s'étendant entre ces cadres terminaux (4,5), de telle sorte que la tôle de fond (2) entoure les turbines raccordées depuis le fond jusqu'à une partie arrière de celle-ci, caractérisé en ce que :
- chaque turbine (10;701) comporte une section annulaire d'accouplement (14;705) à l'une de ses extrémités et un flasque (15;706) à l'autre extrémité dans la direction axiale, le diamètre de la surface périphérique extérieure du flasque (15) étant égal au diamètre de la surface périphérique intérieure(705a) de la section annulaire d'accouplement (14) de telle sorte que les turbines s'ajustent sous pression lorsque les sections (14,15) coopèrent l'une avec l'autre,
- et les turbines (10) sont raccordées les unes aux autres de telle manière que les aubes (12) adjacentes les unes aux autres sont disposées de façon à être décalées les unes par rapport aux autres.

2. Ventilateur de refroidissement à flux transversal selon la revendication 1, caractérisé en ce que le flasque (15) comporte des sections en relief (108) sur sa surface périphérique extérieure (706a , tandis que la section d'accouplement comporte une section en retrait (707) au niveau de sa surface périphérique intérieure (705a) pour assurer le verrouillage annulaire des turbines coopérantes.

3. Ventilateur de refroidissement à flux transversal selon la revendication 1 ou la revendication 2, caractérisé en ce qu'au moins le flasque (15) et la section d'accouplement (14) sont en un matériau résineux.

4. Ventilateur de refroidissement à flux à transversal selon les revendications 1 à 3, caractérisé en ce que la section d'accouplement (14 de la dernière turbine située sur l'extrémité ouverte de l'ensemble de turbines raccordées (10) est fermée par un flasque auxiliaire(15'), qui comporte également des sections en relief (17') pour loger sous pression le flasque dans la section en retrait (16) de la section annulaire d'accouplement (14), l'une au moins des ouvertures de coopération (15') recevant une saillie de positionnement correspondante (12a).

5. Ventilateur de refroidissement à flux transversal selon l'une quelconque des revendications 1 à 4, caractérisé en ce qu'un carter (120;306;406) d'un moteur sans balai est raccordé au flasque (114;310;410).

6. Ventilateur de refroidissement à flux à transversal selon la revendication 5, caractérisé en ce que le moteur sans balai a une section de circuit de commande (607) disposé sur un côté de la tôle de fond (2;603b) de façon à être refroidie par l'air de refroidissement sortant de la turbine associée (10).

7. Ventilateur de refroidissement à flux à transversal selon l'une quelconque des revendications 1 à 4, caractérisé en ce que le moteur (120,125) est disposé entre le cadre terminal (110) et sa turbine associée (107) pour faire tourner l'ensemble des turbines.

## Patentansprüche

1. Ein Kühlventilator mit Durchfluß, der umfaßt:
- Mehrere Gebläserotoren (10), die jeweils eine Axialrichtung definieren und in ihrer Axialrichtung miteinander verbunden sind, wobei jeder Gebläserotor einen Endplattenabschnitt (15; 706) mit umfangsmäßig angeordneten Eingriffsöffnungen (15b) aufweist, in die an den einzelnen Schaufeln (12; 703) angeordnete Positionsvorsprünge (12a) eingreifen;
- eine metallische Bodenplatte (2) mit einer Länge in Axialrichtung, die der Länge der zusammengesetzten Gebläserotoren (10) entspricht und an der an jedem Ende Einbauabschnitte (20a, 21a, 22a; 20a', 21a', 22a') angeordnet sind;
- ein Metallgehäuse (3) mit einer Länge in Axialrichtung, die der Länge der zusammengesetzten Gebläserotoren (1 ) entspricht, und mit ausgebildeten Einbauabschnitten (30a, 30a', 31a') an jedem Ende dieses Gehäuses (3), das eine vordere, obere Seite der zusammengesetzten Gebläserotoren (19) umgibt;
- ein Paar Stirnrahmen (4, 5), deren jeder Einbaumittel (41a, 41b, 41c, 41d, 51a, 51b, 51c, 51d) aufweist, um die Endeinbauabschnitte der entsprechenden Bodenplattenenden und des Gehäuses aufzunehmen, in denen:
- diese Stirnrahmen (4, 5) mit die entsprechenden Enden der Bodenplatte (2) und des Gehäuses (3) verbunden sind, wobei sich die verbundenen Gebläserotoren (10) zwischen diesen Stirnrahmen (4, 5) erstrecken, so daß die Bodenplatte (2) die verbundenen Gebläserotoren von einem Bodenteil derselben zu einem hinteren Teil derselben umgibt, dadurch gekennzeichnet, daß

- jeder Gebläserotor (10, 701) einen ringförmigen Kupplungsabschnitt (14; 705) an einem Ende und einen Endplattenabschnitt (15; 706) am anderen Ende in Axialrichtung umfaßt, wobei der Durchmesser der äußeren Umfangsfläche der Endplattenabschnitts (15) so ausgelegt ist, daß er mit dem Durchmesser der inneren Umfangsfläche (705a) des ringförmigen Kupplungsabschnitts (14) gleich ist, so daß diese Rotoren unter Pressung aneinanderliegen, wenn die Abschnitte (14, 15) ineinandergreifen,

- und daß die Gebläserotoren (10) miteinander so verbunden sind, daß die jeweils benachbarten Schaufeln (12) so angeordnet sind, daß sie gegeneinander versetzt sind.

2. Ein Kühlventilator mit Durchfluß gemäß Anspruch 1, dadurch gekennzeichnet, daß der Endplattenabschnitt (15) hochstehende Abschnitte (108) an der äußeren Umfangsfläche (706a) aufweist, während der Kupplungsabschnitt einen ausgesparten Ausschnitt (707) an der inneren Umfangsfläche (705a) aufweist, um die einrastenden Gebläserotoren ringförmig zu verriegeln.

3. Ein Kühlventilator mit Durchfluß gemäß Anspruch 1 oder 2, dadurch gekennzeichnet, daß mindestens der Endplattenabschnitt (15) und der Kupplungsabschnitt (14) aus Harzmaterial bestehen.

4. Ein Kühlventilator mit Durchfluß gemäß Anspruch 1 bis 3, dadurch gekennzeichnet, daß der am offenen Ende der miteinander verbundenen Gebläserotoren (10) angeordnete Kupplungsabschnitt (14) des letzten Gebläserotors durch eine Hilfsendplatte (15') verschlossen ist, die ebenfalls hochstehende Abschnitte (17') zur Druckpassung der Endplatte in den ausgesparten Abschnitt (16) des ringförmigen Kupplungsabschnitts (14) enthält, wobei mindestens eine Eingriffsöffnung (15b) einen entsprechenden Positioniervorsprung (12a) aufnimmt.

5. Ein Kühlventilator mit Durchfluß gemäß einem beliebigen der Ansprüche 1 bis 4, dadurch gekennzeichnet, daß ein Gehäuse (120; 306; 406) eines bürstenlosen Motors mit der Endplatte (114; 310; 410) verbunden ist.

6. Ein Kühlventilator mit Durchfluß gemäß Anspruch 5, dadurch gekennzeichnet, daß dieser bürstenlose Motor einen Steuergerätabschnitt (607) hat, der an einer Seite der Bodenplatte (2; 603b) angeordnet ist, so daß er durch die Kühlluft aus dem zusammengesetzten Gebläserotor (10) gekühlt wird.

7. Ein Kühlventilator mit Durchfluß gemäß einem beliebigen der Ansprüche 1 bis 4, dadurch gekennzeichnet, daß der Motor (120, 125) zwischen dem Stirnrahmen (110) und seinem zugeordneten Gebläserotor (107) angeordnet ist, um die Gebläserotoren in Umdrehung zu versetzen.

FIG. 1

FIG. 2

FIG. 3

FIG. 4

FIG. 5

FIG. 6

FIG. 7

FIG. 8

121a   120
        123a

124

FIG. 9

214  208  210      204        202      201      203   211
                                                        209
206                                                     207
215                                                     213

212

FIG. 10

206  208  215B  210   204  218b  202  201     203  211
                                                    207

215                                                 209

215A

218a

FIG. 11

FIG. 12

FIG. 13

FIG. 14

FIG. 15

EP 0 246 325 B1

FIG. 16

FIG. 17

25

FIG. 18

FIG. 19

FIG. 20

FIG. 21

FIG. 22

FIG. 23

FIG. 24

FIG. 25

FIG. 26

FIG. 27

EP 0 246 325 B1